# EUROPÄISCHE PATENTANMELDUNG

(11) **EP 1 428 595 A1**
(43) Veröffentlichungstag der Anmeldung: **16.06.2004**
(21) Anmeldenummer: 03405883.4
(22) Anmeldetag: 09.12.2003
(51) Int. Cl.: B21F 23/00, B65G 47/14

(54) **Verfahren und Vorrichtung zum Vereinzeln von Drähten eines Drahtbündels**

(30) Priorität: 09.12.2002 EP 02406082
(71) Anmelder: H.A. SCHLATTER AG, CH-8952 Schlieren Zürich (CH)
(72) Erfinder: Kämpf, Hans, 8966 Oberwil-Lieli (CH); Rappold, Dietmar, 8953 Dietikon (CH)
(74) Vertreter: Roshardt, Werner Alfred, Dipl.-Phys.

(57) **Zusammenfassung**

Bei einem Verfahren zum Vereinzeln von Drähten eines Drahtbündels oder ähnlichen langen, dünnen, gebündelten Objekten wird das Drahtbündel auf eine in Zuführrichtung geneigte Zuführebene (1) gegeben, so dass die Drähte sich unter Wirkung der Schwerkraft auf ein Führungsorgan (7) mit Kontrollspalt (8) zu bewegen können. Der Kontrollspalt (8) hat eine dem Drahtdurchmesser entsprechende Breite und ist zur Aufnahme der vereinzeiten Drähte in Form einer einlagigen Drahtschicht ausgebildet. Das Drahtbündel wird in einem Stauraum (4) gestaut, welcher in Zuführrichtung hinter einem Drahtrückhalteelement (3) gebildet ist. Ein in Zuführrichtung vor dem Stauraum (4) angeordnetes Hebeelement (12) wird durch die Zuführebene (1) hindurch nach oben entgegen der Zuführrichtung gegen die sich bewegenden Drähte geführt und wirkt mit einem gegenüber dem Hebeelement (12) angeordneten Expansionsraum (6) zusammen, welcher gegenüber dem Stauraum (4) abgetrennt ist. Durch den Stauraum (4) wird die Anzahl Drähte, die auf das Hebeelement (12) gelangen, dosiert. Dadurch wird unter anderem der Druck auf die Vereinzelungszone beim Hebeelement (12) verringert. Die Bewegung des Hebeelements (12) nach oben wirkt der Schwerkraft entgegen, und der Expansionsraum (6) nimmt Drähte auf, welche durch das Hebeelement (12) nach oben gedrückt werden. Beides führt zu einer verbesserten parallelen Ausrichtung der Drähte und zu einer besseren Zuführung der Drähte zum Kontrollspalt (8). Die Erfindung betrifft auch eine Vorrichtung zur Durchführung des Verfahrens.

## Beschreibung

### Technisches Gebiet

Die Erfindung betrifft ein Verfahren zum Vereinzeln von Drähten eines Drahtbündels oder ähnlichen langen, dünnen, gebündelten Objekten, wobei das Drahtbündel auf eine in Zuführrichtung geneigte Zuführebene gegeben wird, so dass die Drähte sich unter Wirkung der Schwerkraft auf ein Führungsorgan mit Kontrollspalt zu bewegen können, welcher eine einem Durchmesser der Drähte angepasste Breite hat und zur Aufnahme der vereinzelten Drähte in Form einer einlagigen Drahtschicht ausgebildet ist, wobei das Drahtbündel in einem Stauraum gestaut wird, der in Zuführrichtung hinter einem Drahtrückhalteelement gebildet ist. Weiter bezieht sich die Erfindung auf eine Vorrichtung zur Durchführung des Verfahrens.

### Stand der Technik

Bei Gitterschweissmaschinen, die mit Drähten mit vorkonfektionierter Länge arbeiten, ist es erforderlich, die Drähte, welche als Bündel angeliefert werden, zu vereinzeln. Die Geschwindigkeit und Zuverlässigkeit der Vereinzelung kann ganz wesentlich zur Produktionsleistung der Schweissmaschine beitragen.

Vorrichtungen und Verfahren zum Vereinzeln von Drähten gehören an sich zum Stand der Technik.

Die CH 691 669 (Schlatter) zeigt ein solches Verfahren, wobei das Drahtbündel mit mehreren nebeneinander angeordneten Bearbeitungselementen bearbeitet wird, bevor es zum Kontrollspalt gelangt. Die Bearbeitungselemente verfügen über eine zur Zuführebene parallele Streichkante und eine gegen das Drahtbündel gerichtete Abstreifkante. Die Streichkante wird über eine soeben entstandene einlagige Drahtschicht geführt, abgehoben und wieder an den Ausgangspunkt zurückgeführt. Das heisst, es wird eine kreisende Bewegung ausgeführt, ähnlich wie beim manuellen Vereinzeln der Drähte durch eine Bedienperson. Die Abstreifkante schiebt dabei all jene Drähte zum Drahtbündel zurück, welche über das einlagige Drahtniveau hinausragen.

Bei der AT 368 414 (EVG) erfasst ein schwenkbarer Abstreifdaumen am Eingang des Kontrollspalts alle über der untersten Drahtlage liegenden Drähte und schiebt diese zum Drahtbündel zurück. Der Abstreifdaumen führt eine lineare Bewegung aus.

Bei diesen bekannten Vorrichtungen, welche von oben auf die Drähte einwirken, wird vorausgesetzt, dass sich die Drähte der untersten Lage selbständig parallel anordnen. Dies ist aber abhängig vom Drahtdurchmesser, der Drahtlänge und der zu vereinzelnden Drahtmenge nicht immer der Fall. Eine verbesserte Vereinzelung ergibt sich bei von unten auf die Drähte einwirkenden Vorrichtungen zur Vereinzelung.

Die DE 738 828 C (Lange) beschreibt eine Vorrichtung zur Drahtstabzuführung bei Schweisselektrodenumhüllungseinrichtungen. Dabei wird die Vorschubbewegung der Drahtstäbe durch zwei zusammenwirkende, horizontal liegende Rollen mit je einer Abflachung periodisch unterbrochen. Die Drahtstäbe sind in einem Vorratsbehälter gelagert, an dessen unteren Ende zwei Walzenpaare angeordnet sind. Die Walzen eines der Walzenpaare weisen längs laufende Vertiefungen auf. Beide Walzenpaare werden der Vorschubbewegung der Drahtstäbe entgegen gedreht und bewirken dadurch eine Auflockerung.

Die DE 11 11 907 B (Gebr. Boehler) zeigt eine Vorrichtung zum Zuführen von Stäben, insbesondere Schweissdrähten, aus einem trichterartigen Vorratsbehälter zu einem engen Führungskanal. Am Übergang zwischen dem Vorratstrichter und dem Kanal sind angetriebene Walzen angeordnet, welche gegenläufig nach unten und oben bewegt werden können. Die Walzen dringen dazu bei der Auf- und Abbewegung in den Vorratsstapel der Drähte ein. Zur Unterstützung können sie zudem in einander entgegengesetztem Drehsinn angetrieben sein.

Diese Vereinzelungsvorrichtungen, welche von unten auf das Drahtbündel einwirken, zeigen eine verbesserte Vereinzelungswirkung. Allerdings ist die Vereinzelung erschwert oder verunmöglicht, wenn eine grosse Zahl von Drähten gleichzeitig zur Vorrichtung gelangt.

Die CH 442 150 A (Gebr. Eickhoff) zeigt eine Vereinzelungsvorrichtung für stabförmige Teile. Diese umfasst einen Vorratsbehälter mit einer zu einer Ablauföffnung geneigten, schwenkbaren Bodenfläche. Am unteren Ende der geneigten Fläche ist eine parallel zur Achse der stabförmigen Teile liegende Rolle angeordnet, welche sich in der zur Bewegung der Teile entgegengesetzten Richtung dreht. Die Rolle ist mit ringförmigen Eindrehungen versehen, worin die geneigte Fläche eingreift. Sie ist ferner mit einer Riffelung versehen, deren Erhöhungen und Vertiefungen parallel zur Achse der Rolle verlaufen. Bei dieser Vorrichtung kann die Zahl der zur Vereinzelungsvorrichtung gelangenden Drähte durch Schwenken der Bodenfläche in gewissen Grenzen reguliert werden.

In der Praxis zeigt sich allerdings, dass bei all den bekannten Vorrichtungen Probleme auftreten. Wegen der hohen Flexibilität der vorgefertigten Drahtstücke können sich deren Enden relativ frei bewegen und leicht überkreuzen. Dies führt dazu, dass die Zuführung der Drahtstücke gestört oder gar blockiert wird. Die erwähnten Vorrichtungen und Verfahren sind zudem besonders für sehr dünne Drähte geeignet und weniger für solche mit grösserem Querschnitt.

### Darstellung der Erfindung

Aufgabe der Erfindung ist es, ein dem eingangs genannten technischen Gebiet zugehörendes Verfahren zu schaffen, welches zur Vereinzelung von Drähten geeignet ist und die Zuführung der Drähte sowie deren parallele Ausrichtung verbessert. Das Verfahren soll mit möglichst geringem technischem Aufwand maschinell umgesetzt werden können.

Die Lösung der Aufgabe ist durch die Merkmale des Anspruchs 1 definiert. Gemäss der Erfindung wird ein in Zuführrichtung vor dem Stauraum angeordnetes Hebeelement durch die Zuführebene hindurch nach oben, entgegen der Zuführrichtung gegen die sich bewegenden Drähte geführt und wirkt mit einem gegenüber dem Hebeelement angeordneten Expansionsraum zusammen, der gegenüber dem Stauraum abgetrennt ist.

Die Bewegung des Hebeelements nach oben wirkt der Schwerkraft entgegen. Dies führt dazu, dass die Drähte, welche sich unter Wirkung der Schwerkraft auf das Führungsorgan hin bewegen, aufgelockert werden. Gleichzeitig werden einige der Drähte, besonders jene, welche noch überkreuzt oder ineinander verkeilt sind, wieder entgegen der Zuführrichtung zurück gestossen, so dass die Anzahl zum Führungsorgan geförderter Drähte pro Zeiteinheit vermindert wird. Dies hat zur Folge, dass die Vereinzelung der Drähte zusätzlich und bereits vor dem Führungsorgan unterstützt wird. Schliesslich führt die Auflockerung der Drähte und das Zurückstossen eines Teils der Drähte zu einer besseren Zuführung zum Führungsorgan, indem vermieden wird, dass ineinander verkeilte Drähte den Zugang zum Kontrollspalt blockieren. Eine sich bildende Blockade wird nämlich durch das Hebeelement bereits frühzeitig wieder aufgelöst.

Der Expansionsraum nimmt Drähte auf, welche durch das Hebeelement nach oben gedrückt werden und fördert deren parallele Ausrichtung. In einem nächsten Schritt können die Drähte das Hebeelement passieren und unter Wirkung der Schwerkraft weiter zum Führungsorgan gelangen.

Durch den dem Hebeelement vorgelagerten Stauraum wird die Anzahl Drähte, die auf das Hebeelement gelangen, dosiert. Auch wenn ein grosses Drahtbündel auf die Zuführebene gegeben wird, passiert nur eine bestimmte Anzahl von Drähten das Drahtrückhalteelement und gelangt zum Hebeelement. Gleichzeitig wird auch der Druck auf die Vereinzelungszone beim Hebeelement verringert. Beides führt dazu, dass die parallele Ausrichtung der Drähte sowie der Weitertransport zum Führungsorgan verbessert werden. Das Drahtrückhalteelement kann ein passives Bauteil sein, z. B. eine entsprechend geformte und orientierte Wand, welche den Stauraum nach vorne begrenzt, es kann aber auch z. B. durch mechanische Mittel gebildet werden, welche das Drahtbündel aufteilen und die einzelnen Teile in die Vereinzelungszone transportieren.

Die Zuführebene kann durch eine massive Platte, durch ein Führungsgitter bzw. durch Führungsbalken oder andere Mittel gebildet werden.

Als Zuführrichtung wird jene geometrische Richtung verstanden, welche der Transportrichtung der Drähte bei der Zuführung entlang der geneigten Zuführebene zum Führungsorgan mit Kontrollspalt entspricht. Sie ist im Wesentlichen parallel zur Falllinie der geneigten Zuführebene.

Das erfindungsgemässe Verfahren ist nicht auf die Vereinzelung von Drähten beschränkt, vielmehr können auch andere lange, dünne gebündelte Objekte verarbeitet werden.

Vorzugsweise ist das Hebeelement sternförmig und rotiert entgegen der Zuführrichtung. Ein sternförmiges Hebeelement weist einen oder mehrere Arme auf, welche bei Rotation des Elements durch die Zuführebene hindurch nach oben geführt werden und dort auf die sich bewegenden Drähte einwirken. Dazu weist die Zuführebene Aussparungen, z. B.

Schlitze auf, durch welche die Arme nach oben, durch die Zuführebene hindurch treten können.

Durch die Form und die Anzahl der Arme sowie die Wahl der Rotationsgeschwindigkeit lässt sich der Einfluss des Hebeelements auf die Drähte beeinflussen. Mit Vorteil weist das Hebeelement eine gewisse Symmetrie auf, z. B. indem es zwei gegenüberliegende Arme oder eine grössere Anzahl Arme aufweist, die gleichmässig auf dem Umfang des Elements angeordnet sind. Dadurch wird die Unwucht des Elements und damit die Belastung auf die Lager des Elements gering gehalten. Abhängig vom Drahtdurchmesser und von der Geometrie der Vorrichtung können die Arme als Buckel oder Zacken auf dem Umfang des Elements oder auch als radiale Ausleger ausgeformt sein.

Verschiedene Arme eines Hebeelements können auch unterschiedlich ausgebildet sein, z. B. indem entlang des Umfangs des sternförmigen Hebeelements Arme, welche vor allem zu einem Anheben der Drähte führen, mit Armen abwechseln, welche vor allem zu einem Zurückstossen der Drähte führen.

Das Hebeelement kann auch anders ausgebildet sein, z. B. als Exzenterscheibe oder als Hebeplatte, welche periodisch, zufällig oder sensorgesteuert durch die Zuführebene hindurch nach oben und wieder zurück bewegt wird, wobei auch eine Bewegung entgegen der Zuführrichtung stattfindet. Der Antrieb einer solchen Hebeplatte kann z. B. über einen pneumatisch oder hydraulisch betätigten Kolben, einen Nocken oder ein Pleuel erfolgen.

Bevorzugt ist das Hebeelement derart ausgebildet und/oder wird derart geführt, dass die sich bewegenden Drähte mit einer ersten Geschwindigkeit angehoben und mit einer zweiten Geschwindigkeit wieder abgesenkt werden, wobei die erste Geschwindigkeit grösser ist als die zweite Geschwindigkeit. Dies wird z. B. dadurch erreicht, dass die Arme eines rotierenden sternförmigen Elements asymmetrisch ausgebildet sind, so dass sie beim Hindurchtreten durch die Zuführebene nur allmählich auf die Drähte einwirken. Die äussere, im Wesentlichen tangentiale Begrenzung eines Arms ist beispielsweise so geformt, dass sie beim Hindurchtreten durch die Zuführebene entgegen der Zuführebene geneigt ist. Eine an diese Begrenzung anschliessende Flanke fällt dann steil ab, so dass die Drähte schnell zurückfallen und also eine schnelle Absenkbewegung bewirkt wird.

Ist das Hebeelement eine Hebeplatte, so kann diese mit unterschiedlichen Geschwindigkeiten durch die Zuführebene hindurch nach oben und wieder zurück nach unten bewegt werden. Die unterschiedlichen Geschwindigkeiten der Hebe- und der Senkbewegung führen zu einer besseren Vereinzelung der Drähte.

Vorzugsweise wird eine Heberate des Hebeelements, insbesondere abhängig von einem Durchmesser und/oder einer Länge der Drähte, eingestellt. Dies erlaubt eine Optimierung des Vereinzelungsvorgangs, und mit derselben Vereinzelungsvorrichtung kann ein breiteres Anwendungsfeld abgedeckt werden. Die Einstellung der Heberate erfolgt durch eine Steuerung, mit welcher die Anzahl Hübe des Hebeelements, also zum Beispiel die Umdrehungszahl eines rotierenden Elements oder die Anzahl Auf- und Abbewegungen einer Hebeplatte, eingestellt werden kann. In der Steuerung kann eine Tabelle mit Heberaten abgelegt sein, wobei diese Heberaten bei bestimmten Parametern der zu vereinzelnden Drähte (also beispielsweise Drahtdurchmesser und -länge) jeweils eine optimale Vereinzelung erlauben. Die Parameter werden bestimmt, z. B. mittels Sensoren, welche die Länge und den Durchmesser automatisch erfassen, oder durch Eingabe an einem Steuergerät; und abhängig von den bestimmten Parametern wird die Heberate des Hebeelements automatisch eingestellt.

Alternativ, wenn feststeht, dass von einer bestimmten Vereinzelungsvorrichtung nur eine bestimmte Art von Drähten vereinzelt werden soll, kann auf eine einstellbare Heberate verzichtet werden. Die Heberate wird dann fest vorgewählt, derart dass sich eine optimale Vereinzelung der zu verarbeitenden Drahtsorte ergibt.

Mit Vorteil ist die Grösse des Expansionsraums einstellbar. Wenn die Höhe und/oder die Tiefe des Expansionsraums veränderbar ist, kann das Verfahren zur Drahtvereinzelung den Dimensionen der Drähte, insbesondere deren Durchmesser, auf einfache Art und Weise angepasst werden. Vorzugsweise ist in diesem Fall auch die Breite des Kontrollspalts an den Drahtdurchmesser anpassbar.

Mit Vorteil ist der Expansionsraum als Aussparung im Drahtrückhalteelement ausgebildet. Dadurch dient das Drahtrückhalteelement gleichzeitig zur Bildung eines Stauraums hinter dem Element und zur Abtrennung von Stauraum und Expansionsraum. Eine Aussparung, welche auf einem wesentlichen Teil ihrer Innenfläche durch Wände begrenzt ist, bietet überdies den Vorzug, dass die Drähte, welche parallel ausgerichtet werden sollen, optimal geführt werden und dass sie sich nicht an Kanten oder in Aussparungen verfangen können.

Alternativ dazu können ein separates Drahtrückhalteelement und ein separates Führungsorgan beabstandet hintereinander angeordnet sein, wobei der Zwischenraum den Expansionsraum bildet. In diesem Fall ist es vorteilhaft, wenn das Führungsorgan Mittel zur Aufnahme der Drähte aus dem Expansionsraum aufweist, z. B. eine Öffnung zum Expansionsraum, welche sich in Zuführrichtung verjüngt.

Die vereinzelten parallelen Drähte können im Anschluss an das Führungsorgan einer Mitnehmerscheibe zugeführt werden, welche die einzelnen Drähte in einem vorgegebenen Abstand weiter fördert.

Eine Vorrichtung zum Vereinzeln von Drähten eines Drahtbündels oder ähnlich langen, dünnen gebündelten Objekten verfügt über
a) eine in Zuführrichtung (d. h. z. B. gegen eine Drahtauskämmvorrichtung hin) geneigte Zuführebene zur Aufnahme des Drahtbündels;
b) einen Stauraum, der in Zuführrichtung hinter einem Drahtrückhalteelement gebildet ist,
c) ein in Zuführrichtung vor dem Stauraum angeordnetes Hebeelement, welches entgegen der Zuführrichtung durch die Zuführebene hindurch nach oben gegen die Drähte geführt werden kann;
d) einen gegenüber dem Hebeelement angeordneten und gegenüber dem Stauraum abgetrennten Expansionsraum; sowie
e) ein zentral angeordnetes Führungsorgan mit Kontrollspalt, welcher eine dem Durchmesser der Drähte angepasste Spaltbreite hat und zur Aufnahme der Drähte in Form einer einlagigen Drahtschicht ausgebildet ist.

Die Neigung der Zuführebene wird so gewählt, dass sich die Drähte unter der Wirkung der Schwerkraft mit einer gewünschten Geschwindigkeit auf das Führungsorgan hin bewegen. Die Breite der Zuführebene entspricht der Drahtlänge.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnung

Die zur Erläuterung des Ausführungsbeispiels verwendeten Zeichnungen zeigen:
- Fig. 1: Einen Querschnitt einer erfindungsgemässen Vorrichtung zum Vereinzeln von Drähten;
- Fig. 2A, 2B: detaillierte Darstellungen des Hebeelements der erfindungsgemässen Vorrichtung.

Grundsätzlich sind in den Figuren gleiche Teile mit gleichen Bezugszeichen versehen.

### Wege zur Ausführung der Erfindung

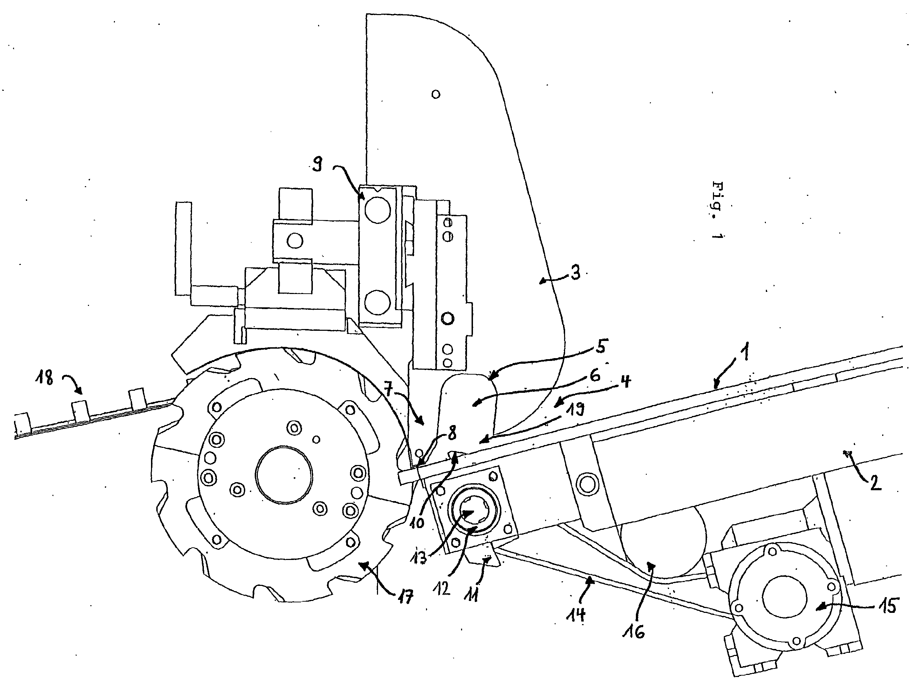

Die Figur 1 zeigt einen Querschnitt einer erfindungsgemässen Vorrichtung zum Vereinzeln von Drähten, wie sie insbesondere in einer Gitterschweissmaschine zur Vereinzelung der Querdrähte eingesetzt werden kann. Die Vorrichtung weist eine gegen die Zuführrichtung geneigte Zuführebene 1 auf. Diese ist auf der Oberseite einer geneigten Maschinenbasis 2 angeordnet. Mit Vorteil weist die Zuführebene 1 in Zuführrichtung verlaufende Rippen auf, um die Reibung zwischen den Drähten und der Zuführebene zu minimieren. Die Rippen können z. B. durch Drähte gebildet werden, die auf ein Blech aufgeschweisst sind.

Oberhalb der Zuführebene 1 ist ein Drahtrückhalter 3 angeordnet, welcher im Wesentlichen als eine vertikale flache Platte ausgebildet ist, deren Hauptfläche parallel zur Zuführrichtung ist. Die Begrenzung der Platte hat auf der der Zuführebene 1 zugewandten äusseren Seite eine abgerundete Form, so dass sich die Öffnung zwischen der Zuführebene 1 und dem Drahtrückhalter 3 in Zuführrichtung kontinuierlich verengt. Hinter dem Drahtrückhalter 3 wird dadurch ein Stauraum 4 gebildet.

Der Drahtrückhalter 3 weist auf seiner Unterseite eine im Wesentlichen rechteckige Aussparung 5 mit abgerundeten Kanten auf, so dass die Öffnung zwischen der Zuführebene 1 und dem Drahtrückhalter 3 abschnittsweise erweitert ist und ein Expansionsraum 6 gebildet wird.

Der Drahtrückhalter 3 bildet an seinem der Zuführebene 1 zugewandten inneren Ende ein Führungsorgan 7, dessen Begrenzung auf der Unterseite flach ist, so dass ein Kontrollspalt 8 in der Form eines Kanals mit konstantem Querschnitt zwischen dem Drahtrückhalter 3 und der Zuführebene 1 gebildet wird. Der Eingang des Kontrollspalts 8 erweitert sich in Richtung des Expansionsraums 6.

Der Drahtrückhalter 3 ist an einer Haltevorrichtung 9 so befestigt, dass er vertikal verschoben werden kann. Dies erlaubt eine Vergrösserung bzw. Verkleinerung der Breite des Kontrollspalts 8, so dass die Vorrichtung verschiedenen Durchmessern der zu vereinzelnden Drähte angepasst werden kann. Gleichzeitig wird auch die vertikale Ausdehnung des Expansionsraums 6 verändert.

Unterhalb des Expansionsraums weist die Zuführebene 1 eine schlitzförmige Öffnung auf, wobei der Schlitz in Zuführrichtung orientiert ist. Durch diesen Schlitz greifen Arme 10, 11 eines Hebeelements 12 durch die Zuführebene 1 hindurch nach oben. Die Arme 10, 11 des Hebeelements 12 sind an einer Achse 13 angebracht, welche drehbar in der Maschinenbasis 2 gelagert ist. Der Querschnitt der Arme 10, 11 ist im Wesentlichen trapezförmig, wobei die äussere Begrenzung schräg verläuft, so dass bei einer Rotation der Achse 13 der Teil der Arme 10, 11, welcher über die Zuführebene 1 hinaus ragt, in Zuführrichtung kontinuierlich zunimmt. Das Hebeelement 12 ist weiter unten eingehender beschrieben. Die Achse 13 wird über einen Riemen 14 angetrieben, welcher durch einen Motor 15 bewegt werden kann. Der Riemen 14 wird durch eine Umlenkrolle 16 so geführt, dass er durch zwei Öffnungen in der Unterseite der Maschinenbasis 2 um eine mit der Achse 13 drehfest verbundene Riemenscheibe geführt werden kann.

Anschliessend an den Kontrollspalt 8 weist die Zuführebene 1 eine weitere schlitzförmige Ausnehmung in Zuführrichtung auf, in welche eine drehbar gelagerte, im Wesentlichen kreisförmige Mitnehmerscheibe (oder Auskämmscheibe) 17 eingreift, deren Hauptebene ebenfalls in Zuführrichtung liegt. Die Mitnehmerscheibe 17 weist an ihrem äusseren Rand periodische Ausnehmungen auf. An die Mitnehmerscheibe 17 schliesst sich im Weiteren ein Förderband 18 an.

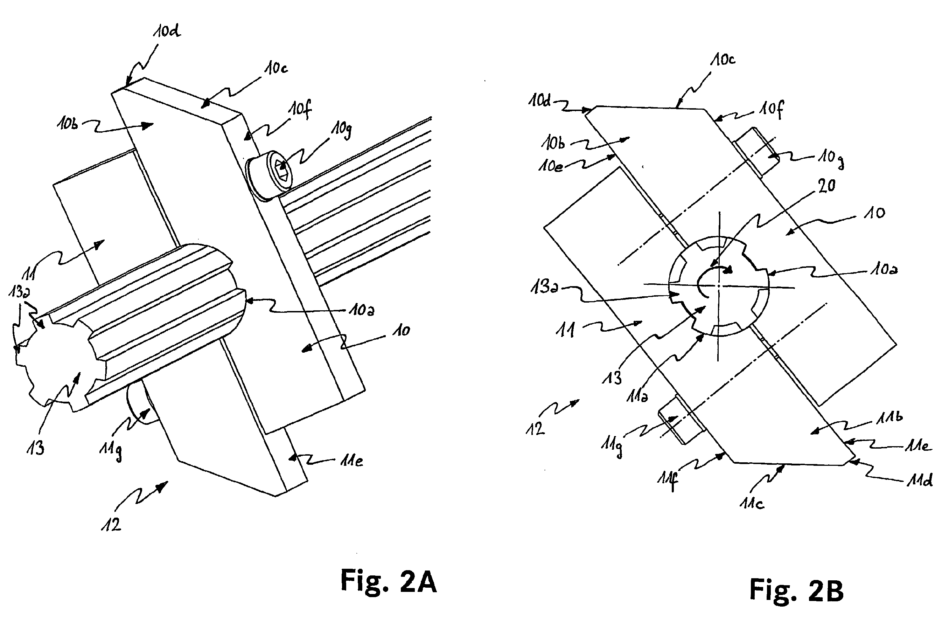

Die Figuren 2A, 2B zeigen detaillierte Darstellungen des Hebeelements der erfindungsgemässen Vorrichtung: Die Figur 2A zeigt eine Schrägansicht; die Figur 2B eine Seitenansicht in Richtung der Drehachse. Das Hebeelement 12 wird gebildet durch die zwei Arme 10,11 welche drehfest mit einer drehbaren Achse 13 verbunden sind. Dazu weist die Achse 13 einen profilierten Querschnitt auf, wobei die längs verlaufenden Profile 13a mit einem entsprechenden Profil der im Wesentlichen halbkreisförmigen Ausnehmungen 10a, 11a der Arme 10, 11 formschlüssig zusammenwirken.

Die Arme 10, 11 sind prismatisch mit im Wesentlichen trapezförmiger Grundfläche, wobei jeder der Arme 10, 11 in radialer Richtung einseitig über den anderen Arm 11, 10 hinausragt. Die hinausragenden Bereiche 10b, 11 b weisen in Drehrichtung 20 vorne eine flach ansteigende Flanke 10c, 11c auf, der Flankenwinkel beträgt im dargestellten Beispiel ca. 30°. Die Flanke 10c, 11c geht über in einen kurzen tangentialen Bereich 10d, 11d, woran die radial verlaufende hintere Flanke 10e, 11e anschliesst. Die Achse 13 ist so unterhalb der Zuführebene angeordnet, dass lediglich die vordere Flanke 10c, 11 c, der tangentiale Bereich 10d, 11 d und ein oberster Abschnitt der hinteren Flanke 10e, 11e durch die Zuführebene hindurch tritt. Weder der radial verlaufende Abschnitt 10f, 11f, welcher vorne an die vordere Flanke 10c, 11c anschliesst, noch das hintere Ende des jeweils anderen, abgewandten Arms 11, 10 treten durch die Zuführebene hindurch.

Die Arme sind aneinander mittels Schrauben 10g, 11g befestigt, welche im Wesentlichen tangential zur Achse 13 verlaufen. Durch das Anziehen der Schrauben 10g, 11 g ergibt sich gleichzeitig die mechanisch stabile drehfeste Verbindung mit der Achse 13.

Durch die Form der Arme 10, 11 des Hebeelements 12 ergibt sich ein langsames Anheben der zu vereinzelnden Drähte und anschliessend ein schnelles Absenken. Die kurzen tangentialen Abschnitte 10d, 11d ermöglichen einen sanften Übergang von der Hebe- in die Absenkbewegung. Gleichzeitig wird die Bildung einer mechanisch empfindlichen Spitze am Ende der Arme 10, 11 vermieden.

Das erfindungsgemässe Verfahren wird mit der in Figur 1 dargestellten Vorrichtung wie folgt durchgeführt. Ein Drahtbündel aus einer grossen Anzahl fertig vorbereiteter, langer dünner Drähte wird auf die Zuführebene 1 gegeben. Durch die Schwerkraft bewegen sich die Drähte des Bündels tendenziell in Richtung des Drahtrückhalters 3. Durch dessen äussere, allmählich in Richtung der Zuführebene zulaufende Begrenzung wird die Mehrzahl der Drähte im Stauraum 4 zurückgehalten. Nur die Drähte der untersten, auf der Zuführebene 1 aufliegenden Schichten können die Öffnung zwischen dem Drahtrückhalter 3 und der Zuführebene 1 passieren und weiter in Zuführrichtung rutschen bzw. rollen.

So gelangen diese Drähte in die Vereinzelungszone 19 zwischen dem Hebeelement 12 und dem Expansionsraum 6. Sobald einer der Arme 10, 11 des Hebeelements 12 durch die Rotation der Achse 13 über die Zuführebene 1 hinaus ragt, erfasst er einige jener Drähte, die sich gerade in der Vereinzelungszone 19 befinden und hebt sie an. Dadurch werden einige Drähte wieder entgegen der Zuführrichtung in den Stauraum 4 zurück bewegt und andere Drähte gelangen in den Expansionsraum 6. Im Expansionsraum 6 können sich die Drähte parallel ausrichten, weil ihnen dort mehr Platz zur Verfügung steht und sie dort also lockerer angeordnet sind als im Drahtbündel, im Stauraum oder in den engen Bereichen zwischen dem Drahtrückhalter 3 und der Zuführebene 1. Die Drähte, welche durch das Hebeelement 12 in den Stauraum zurück gedrückt worden sind, führen überdies im Stauraum zu einer Auflockerung der dort liegenden Drähte und fördern dadurch das Nachrutschen neuer Drähte.

Die im Expansionsraum 6 parallel ausgerichteten Drähte fallen aufgrund der Schwerkraft wiederum auf die Zuführebene 1. Die Geschwindigkeit des Motors 15 und damit der rotierenden Achse 13 des Hebeelements 12, also die Frequenz mit welcher einer der Arme 10, 11 durch die Zuführebene 1 hindurch tritt, lässt sich so einstellen bzw. regeln, dass in dem Moment, in dem die parallel ausgerichteten Drähte wieder auf die Zuführebene 1 gelangen, gerade kein Hebevorgang erfolgt. Die Drähte können sich also ungehindert weiter in Zuführrichtung bewegen und passieren als einlagige Drahtschicht den Kontrollspalt 8 des Führungsorgans 7. Dieser ist gerade so hoch, dass eine einlagige Drahtschicht mit geringem Spiel Platz hat und überkreuzte Drähte zurückgehalten werden. Seine Höhe beträgt z. B. das 1.1- bis 1.4-fache des Drahtdurchmessers. In jedem Fall sollte die Höhe kleiner als der doppelte Drahtdurchmesser sein.

Die Mitnehmerscheibe 17 dreht sich in Zuführrichtung und erfasst mit jeder ihrer Ausnehmungen jeweils einen einzelnen Draht, welcher den Kontrollspalt 8 passiert hat. Durch die Mitnehmerscheibe 17 werden die nun vereinzelten Drähte weiter gefördert und zum weiteren Transport z. B. auf das Förderband 18 mit konstantem Abstand abgelegt.

Falls das Verfahren mit Drähten einer grösseren Dicke durchgeführt werden soll, wird der Drahtrückhalter 3 von der Zuführebene 1 weg nach oben bewegt, so dass einerseits der Kontrollspalt 8 verbreitert und andererseits der Expansionsraum vergrössert wird.

Die Umdrehungsgeschwindigkeit der Achse 13, an welcher die Arme 10,11 des Hebeelements 12 angebracht sind, wird an die Länge der zu vereinzelnden Drähte sowie an deren Durchmesser angepasst, wobei sich bei der dargestellten Ausführung der Vereinzelungsvorrichtung folgende Wahl der Umdrehungszahl pro Minute bei verschiedenen Drahtlängen und -durchmessern als vorteilhaft erwiesen hat:

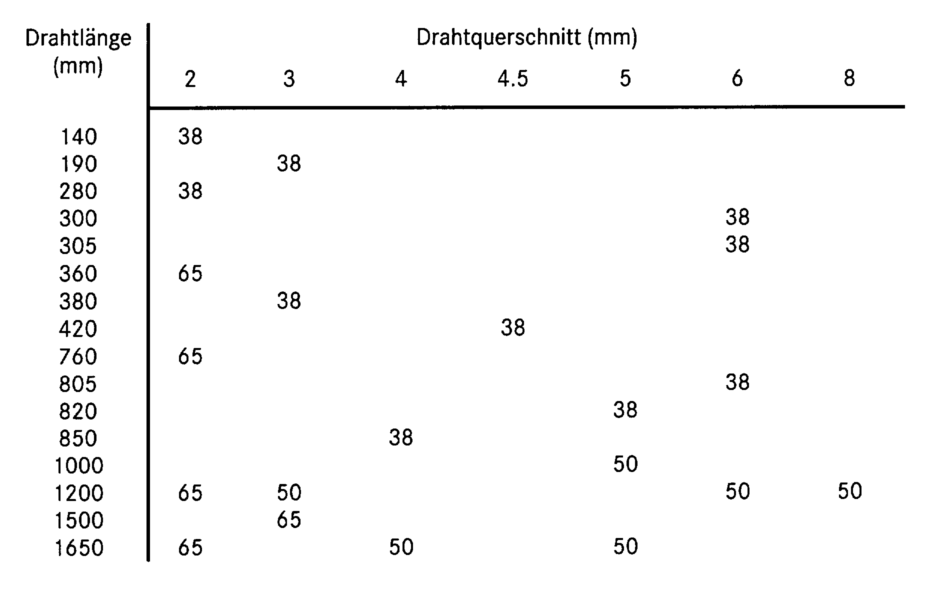

Es ist dabei zu beachten, dass die für das Verfahren wesentliche Grösse die Rate der Hebevorgänge (Heberate) ist, im vorliegenden Beispiel ist diese (angegeben in Hüben pro Minute) aufgrund der zwei Arme 10, 11 doppelt so gross wie die angegebene Umdrehungszahl.

Es zeigt sich, dass bei geringen Drahtdurchmessern sowie bei grossen Drahtlängen tendenziell eine höhere Heberate gewählt werden muss. Eine Tabelle, welche unter anderem die oben angegebenen (bzw. der entsprechenden Maschine angepassten) Werte für die Umdrehungszahl, abhängig vom Drahtdurchmesser und der Drahtlänge, enthält, kann in der Maschinensteuerung abgelegt sein. So kann abhängig vom Drahtdurchmesser und der Drahtlänge automatisch die für die Vereinzelung optimale Umdrehungszahl eingestellt werden.

Es ist zu beachten, dass die zu wählende Umdrehungszahl neben dem Drahtdurchmesser und der Drahtlänge insbesondere von der jeweiligen Ausführung der Vereinzelungsvorrichtung abhängt, insbesondere von der Anzahl und Anordnung von mehreren Vorrichtungen zur Drahtvereinzelung längs der zu vereinzelnden Drahtbündel und der Form des Hebeelements. So kann z. B. die Abhängigkeit von der Drahtlänge minimiert werden, wenn bei längeren Drähten eine grössere Zahl von Vereinzelungsvorrichtungen nebeneinander angeordnet wird als bei entsprechend kürzeren Drähten.

Es hat sich aber gezeigt, dass beispielsweise die Abhängigkeit vom spezifischen Gewicht des Drahtmaterials sehr gering ist. Sind also für eine gegebene Vorrichtung die Werte der oben stehenden Tabelle erst einmal ermittelt, können sie universal für alle Drähte, unabhängig von deren spezifischen Gewicht, verwendet werden.

Das Verfahren und die Vorrichtung in der dargestellten Form sind insbesondere für Drähte geeignet, deren Länge ca. 50 bis ca. 800-mal so gross ist wie ihr Durchmesser. Durch Variation der Dimensionen der Vorrichtung, insbesondere des Drahtrückhalters und des Hebeelements kann die erfindungsgemässe Vorrichtung auch anderen Drahtlängen und - durchmessern angepasst werden. Eine weitere Möglichkeit zur Anpassung ergibt sich, wenn die Neigung des Expansionsraums verstellt werden kann.

Je nach Drahtlänge kann zudem die Anzahl der Vorrichtungen zur Drahtvereinzelung gewählt werden, die parallel entlang der Breite der Zuführebene (d. h. der Länge der Drähte) angeordnet werden. Die Vereinzelung kann in diesem Fall noch verbessert werden, wenn die Hebeelemente der Vorrichtungen phasenmässig unterschiedlich angetrieben werden. Bei kürzeren (oder dickeren) Drähten kann es hingegen optimal sein, die einzelnen Vorrichtungen in Phase anzutreiben. In beiden Fällen können die Phasenunterschiede durch eine sich über die ganze Breite der Vorrichtung erstreckende gemeinsame Antriebswelle fixiert werden.

Die Umdrehungsgeschwindigkeit des Hebeelements und damit die Frequenz der Hebebewegung muss nicht konstant sein. Sie kann vielmehr auch durch Sensoren gesteuert werden, die z. B. die Anzahl Drähte im Expansions- oder Stauraum oder andere Parameter messen. Die Geschwindigkeit bzw. Frequenz des Hebeelements wird in diesem Fall laufend der aktuellen Situation so angepasst, dass die parallele Anordnung der Drähte sowie das Nachrutschen neuer Drähte optimal gefördert werden. Auch die Phasenverschiebung zwischen verschiedenen, in der Breite der Zuführebene angeordneten Vorrichtungen kann durch Sensoren in ähnlicher Weise flexibel steuerbar sein.

Die Vorrichtung kann so ausgebildet werden, dass die Höhe des Kontrollspalts unabhängig von der Grösse des Expansionsraums einstellbar ist, z. B. indem der Kontrollspalt durch ein vom Drahtrückhalter getrenntes Element gebildet wird. Der Grösse des Expansionsraums kann im Übrigen auch durch eine Einstellung der Breite des Expansionsraums verändert werden.

Zusammenfassend ist festzustellen, dass durch die Erfindung ein Verfahren und eine Vorrichtung geschaffen werden, welche zur Vereinzelung von Drähten geeignet sind und die Zuführung der Drähte sowie deren parallele Ausrichtung verbessern und welche insbesondere für die Vereinzelung von Querdrähten bei Gitterschweissmaschinen geeignet sind. Das der Erfindung zu Grunde liegende Prinzip erlaubt aber auch die Vereinzelung anderer drahtähnlicher Objekte.

## Patentansprüche

1. Verfahren zum Vereinzeln von Drähten eines Drahtbündels oder ähnlichen langen, dünnen, gebündelten Objekten, wobei das Drahtbündel auf eine in eine Zuführrichtung geneigte Zuführebene (1) gegeben wird, so dass die Drähte sich unter Wirkung der Schwerkraft auf ein Führungsorgan (7) mit Kontrollspalt (8) zu bewegen können, welcher eine einem Durchmesser der Drähte angepasste Breite hat und zur Aufnahme der vereinzelten Drähte in Form einer einlagigen Drahtschicht ausgebildet ist, wobei das Drahtbündel in einem Stauraum (4) gestaut wird, der in Zuführrichtung hinter einem Drahtrückhalteelement (3) gebildet ist, **dadurch gekennzeichnet, dass** ein in Zuführrichtung vor dem Stauraum (4) angeordnetes Hebeelement (12) durch die Zuführebene (1) hindurch nach oben, entgegen der Zuführrichtung gegen die sich bewegenden Drähte geführt wird und mit einem gegenüber dem Hebeelement (12) angeordneten Expansionsraum (6) zusammenwirkt, der gegenüber dem Stauraum (4) abgetrennt ist.

2. Verfahren nach Anspruch 1, **dadurch gekennzeichnet, dass** das Hebeelement (12) sternförmig ist und entgegen der Zuführrichtung rotiert.

3. Verfahren nach Anspruch 1 oder 2, **dadurch gekennzeichnet, dass** das Hebeelement (12) derart ausgebildet ist und/oder derart geführt wird, dass die sich bewegenden Drähte mit einer ersten Geschwindigkeit angehoben und mit einer zweiten Geschwindigkeit wieder abgesenkt werden, wobei die erste Geschwindigkeit grösser ist als die zweite Geschwindigkeit.

4. Verfahren nach einem der Ansprüche 1 bis 3, **dadurch gekennzeichnet, dass** eine Heberate des Hebeelements (12), insbesondere abhängig von einem Durchmesser und/oder einer Länge der Drähte, eingestellt wird.

5. Verfahren nach einem der Ansprüche 1 bis 4, **dadurch gekennzeichnet, dass** eine Grösse des Expansionsraums (6) einstellbar ist.

6. Verfahren nach einem der Ansprüche 1 bis 5, **dadurch gekennzeichnet, dass** der Expansionsraum (6) als Aussparung im Drahtrückhalteelement (3) ausgebildet ist.

7. Verfahren nach einem der Ansprüche 1 bis 6, **dadurch gekennzeichnet, dass** die vereinzelten Drähte einer Mitnehmerscheibe (17) zugeführt werden.

8. Vorrichtung zum Vereinzeln von Drähten eines Drahtbündels oder ähnlich langen, dünnen, gebündelten Objekten, umfassend
a) eine in einer Zuführrichtung geneigte Zuführebene (1) zur Aufnahme des Drahtbündels,
b) einen Stauraum (4), der in Zuführrichtung hinter einem Drahtrückhalteelement (3) gebildet ist,
c) ein in Zuführrichtung vor dem Stauraum (4) angeordnetes Hebeelement (12), welches entgegen der Zuführrichtung durch die Zuführebene (1) hindurch nach oben gegen die Drähte geführt werden kann,
d) einen gegenüber dem Hebeelement (12) angeordneten und gegenüber dem Stauraum (4) abgetrennten Expansionsraum (6),
e) ein zentral angeordnetes Führungsorgan (7) mit Kontrollspalt (8), welcher eine einem Durchmesser der Drähte angepasste Spaltbreite hat und zur Aufnahme der vereinzelten Drähte in Form einer einlagigen Drahtschicht ausgebildet ist.

9. Vorrichtung nach Anspruch 8, **dadurch gekennzeichnet, dass** das Hebeelement (12) sternförmig ist und entgegen der Zuführrichtung rotierbar angeordnet ist.

10. Vorrichtung nach Anspruch 8 oder 9, **dadurch gekennzeichnet, dass** das Hebeelement (12) derart ausgebildet und/oder derart geführt ist, dass die sich bewegenden Drähte mit einer ersten Geschwindigkeit angehoben und mit einer zweiten Geschwindigkeit wieder abgesenkt werden, wobei die erste Geschwindigkeit grösser ist als die zweite Geschwindigkeit.

11. Vorrichtung nach einem der Ansprüche 8 bis 10, **gekennzeichnet durch** eine Steuerung für das Hebeelement (12), welche derart ausgebildet ist, dass eine Heberate des Hebeelements (12) eingestellt werden kann.

12. Vorrichtung nach Anspruch 11, **dadurch gekennzeichnet, dass** in der Steuerung eine Tabelle mit Heberaten des Hebeelements (12) abhängig von Parametern der zu vereinzelnden Drähte, insbesondere Durchmesser und/oder Länge, ablegbar ist, so dass die Heberate des Hebeelements (12) abhängig von ermittelten Parametern automatisch eingestellt werden kann.

13. Vorrichtung nach einem der Ansprüche 8 bis 12, **dadurch gekennzeichnet, dass** eine Grösse des Expansionsraums (6) einstellbar ist.

14. Vorrichtung nach einem der Ansprüche 8 bis 13, **dadurch gekennzeichnet, dass** der Expansionsraum (6) als Aussparung im Drahtrückhalteelement (3) ausgebildet ist.

15. Vorrichtung nach einem der Ansprüche 8 bis 14, **gekennzeichnet durch** eine Mitnehmerscheibe (17) zum Weiterbewegen der vereinzelten Drähte.
